# EUROPEAN PATENT APPLICATION

(11) **EP 1 494 341 A2**
(43) Date of publication of application: **05.01.2005**
(21) Application number: 04015339.7
(22) Date of filing: 30.06.2004
(51) Int. Cl.: H02M 3/156

(54) **A circuit for driving a load, in particular a direct-current electric motor**

(30) Priority: 01.07.2003 IT TO20030505
(71) Applicant: BTM S.r.l., 10123 Torino (IT)
(72) Inventor: Marchitto, Luciano, 10015 Ivrea (Torino) (IT)
(74) Representative: Quinterno, Giuseppe

(57) **Abstract**

The circuit permits the driving (1) of a load (3) having a first terminal (3a) connected to a terminal of a direct-current voltage source (2), the other terminal of which is connected to a first earth conductor or power earth conductor (PGND).

The driving circuit (1) comprises:
a power driver circuit (PD) with at least one electronic device with controlled conduction (Q, Q1), in particular, a MOSFET transistor (Q, Q1), connected between the other or second terminal (3b) of the load (3) and the power earth conductor (PGND), and
a control and diagnosis circuit (IC, CDC) connected to the power driver circuit (PD) and arranged to drive the at least one electronic device with controlled conduction (Q, Q1) in accordance with predetermined procedures in dependence on an input control signal (INS) and to supply to a diagnosis terminal or output (DOUT) diagnostic signals indicative of any malfunctions or failures which have occurred in the power driver circuit (PD).

The control and diagnosis circuit (IC; CDC) is connected to a second earth conductor or signal earth conductor (SGND) which is physically and electrically distinct from the first earth conductor (PGND).

The driving circuit (1) further comprises:
a connection, detection, and control circuit (PGDD) which is connected to the earth conductors (PGND, SGND) and is suitable for generating a direct-current voltage corresponding to the potential difference between the earth conductors (PGND, SGND) and for supplying to the control and diagnosis circuit means (IC, CDC) a signal suitable for forcing a voltage of predetermined value at the diagnosis terminal or output (DOUT) when that potential difference exceeds a predetermined value.

## Description

The present invention relates in general to a circuit for driving an electrical load such as a direct-current electric motor.

More specifically, the subject of the invention is a load-driving circuit which has a first terminal connected to a terminal of a direct-current voltage source the other terminal of which is connected to a first earth conductor or power earth conductor,
the driving circuit comprising:
a power driver circuit including at least one electronic device with controlled conduction, in particular, a MOSFET transistor, connected between the other or second terminal of the load and the power earth conductor, and
control and diagnosis circuit means connected to the power driver circuit and arranged to drive the at least one electronic device with controlled conduction in accordance with predetermined procedures in dependence on an input control signal and to supply to a diagnosis terminal diagnostic signals indicative of any malfunctions or failures which have occurred in the power driver circuit, the control and diagnosis circuit means being connected to a second earth conductor or signal earth conductor which is physically and electrically distinct from the first earth conductor.

An object of the present invention is to provide a driving circuit of this type which can detect a condition of disconnection between the power driver circuit and the power earth conductor.

This and other objects are achieved, according to the invention, by a driving circuit of the above-mentioned type, characterized in that it further comprises connection, detection, and control circuit means which are connected to the first and second earth conductors and are suitable for supplying a direct-current voltage corresponding to the potential difference between the earth conductors, and for supplying to the control and diagnosis circuit means a signal suitable for forcing a voltage of predetermined value at the diagnosis terminal when the said potential difference exceeds a predetermined value.

In one embodiment, the connection, detection, and control circuit means comprise:
an RC low-pass filter interposed between the earth conductors and including a capacitor suitable for rendering the earth conductors equipotential at high frequencies and a resistor suitable for making available a direct-current voltage corresponding to the potential difference between the earth conductors, and
a threshold comparator having its inputs connected to the filter and an output connected to the control and diagnosis circuit means.

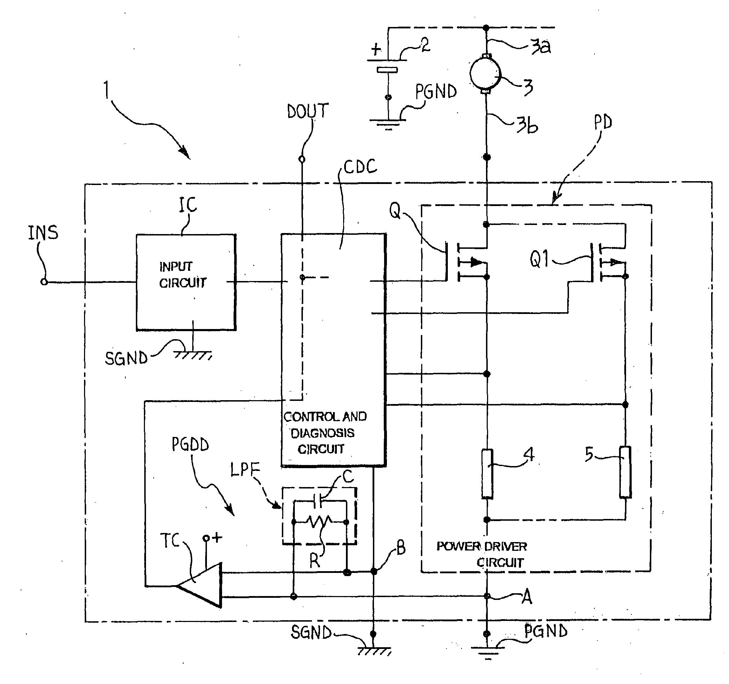

Further characteristics and advantages of the invention will become clear from the following detailed description which is given purely by way of non-limiting example with reference to the appended drawing in which Figure 1 is a block diagram of a driving circuit according to the invention.

In Figure 1, a driving circuit according to the invention is generally indicated 1; the circuit 1 is for driving a load 3 having a first terminal 3a connected to the positive terminal of a direct-current voltage source 2 such as a battery.

The other terminal of the voltage source 2 is connected to a first earth conductor or power earth conductor PGND.

In the embodiment illustrated, the load 3 is a direct-current electric motor.

The other terminal 3b of the load is connected to the power earth conductor PGND via a power driver circuit, generally indicated PD. This driver circuit comprises a first circuit branch which includes an electronic driver device with controlled conduction or master device, indicated Q, and a resistor 4 which acts, in operation, as a sensor of the current which flows through the master device Q.

In the embodiment illustrated, at least one further circuit branch is connected in parallel with the said circuit branch and comprises an electronic driver device with controlled conduction Q1 or slave device and an associated resistor 5 which acts as a sensor of the current which flows through the slave device.

The master device Q and the slave device Q1 are advantageously MOSFET transistors.

The driving circuit 1 further comprises a control and diagnosis circuit CDC interposed between an input circuit IC and the power driver circuit PD.

These circuits IC and CDC are connected to a second earth conductor SGND or signal earth conductor which is physically and electrically distinct from the power earth conductor PGND.

The input circuit IC, which comprises, for example, an amplifier, is intended to receive an external control signal INS in operation and supplies a corresponding control signal to the control and diagnosis circuit CDC. This latter circuit drives the transistors Q and Q1 in accordance with predetermined procedures, and also in dependence on the intensity of the currents which flow, moment by moment, through those transistors and are detected by the resistors 4 and 5.

The control and diagnosis circuit CDC has a diagnosis terminal or output DOUT at which diagnostic signals indicative of any malfunctions or failures that have occurred in the power driver circuit PD are supplied.

The driving circuit 1 further comprises a connection, detection, and control circuit, generally indicated PGDD, connected to the two earth conductors PGND and SGND. This circuit is arranged to generate a direct-current voltage corresponding to the potential difference between the earth conductors and to supply to the control and diagnosis circuit CDC a signal suitable for forcing a voltage of predetermined value at the diagnosis output DOUT when that potential difference exceeds a predetermined value as a result of the disconnection of the power driver circuit PD from the power earth conductor PGND.

In the embodiment illustrated, the connection, detection, and control circuit PGDD comprises an RC low-pass filter LPF interposed between the earth conductors PGND and SGND. This filter comprises a capacitor C suitable for rendering the earth conductors PGND and SGND equipotential at high frequencies, for reasons of electromagnetic compatibility, and a resistor R suitable for making available a direct-current voltage corresponding to the potential difference between the earth conductors. The resistor R has a resistance of relatively high value, for example, of the order of 100 ohms in order to be able to detect currents of very low intensity.

The connection, detection, and control circuit PGDD further comprises a threshold comparator TC having its inputs connected to the earth conductors PGND and SGND and an output connected to an input of the control and diagnosis circuit CDC.

In operation, if the power driver circuit PD is disconnected from the power earth conductor PGND, the point indicated A in the drawing becomes positive relative to the point indicated B therein. The potential difference between A and B thus brings about switching of the threshold comparator TC which is brought, for example, to a "high" level (for example, to a voltage approximately equal to that supplied by the source 2) and forces a corresponding voltage at the diagnosis terminal or output DOUT of the control and diagnosis circuit CDC.

An indication that disconnection has occurred between the power driver circuit PD and the power earth conductor PGND is thus supplied.

Naturally, the principle of the invention remaining the same, the forms of embodiment and details of construction may be varied widely with respect to those described and illustrated purely by way of non-limiting example, without thereby departing from the scope of the invention as defined in the appended claims.

## Claims

1. A circuit (1) for driving a load (3) such as a direct-current electric motor having a first terminal (3a) connected to a terminal of a direct-current voltage source (2) the other terminal of which source is connected to a first earth conductor or power earth conductor (PGND),
the driving circuit (1) comprising:
a power driver circuit (PD) including at least one electronic device with controlled conduction (Q, Q1), in particular, a MOSFET transistor (Q, Q1), connected between the other or second terminal (3b) of the load (3) and the power earth conductor (PGND), and
control and diagnosis circuit means (IC, CDC) connected to the power driver circuit (PD) and arranged to drive the at least one electronic device with controlled conduction (Q, Q1) in accordance with predetermined procedures in dependence on an input control signal (INS) and to supply to a diagnosis terminal or output (DOUT) diagnostic signals indicative of any malfunctions or failures which have occurred in the power driver circuit (PD), the control and diagnosis circuit means (IC; CDC) being connected to a second earth conductor or signal earth conductor (SGND) which is physically and electrically distinct from the first earth conductor (PGND),
the driving circuit (1) being **characterized in that** it further comprises
connection, detection, and control circuit means (PGDD) which are connected to the first and second earth conductors (PGND, SGND) and are suitable for generating a direct-current voltage corresponding to the potential difference between the earth conductors (PGND, SGND) and for supplying to the control and diagnosis circuit means (IC, CDC) a signal suitable for forcing a voltage of predetermined value at the diagnosis terminal or output (DOUT) when the said potential difference exceeds a predetermined value.

2. A driving circuit according to Claim 1 in which the connection, detection, and control circuit means (PGDD) comprise:
an RC low-pass filter (LPF) interposed between the earth conductors (PGND, SGND) and including a capacitor (C) suitable for rendering the earth conductors (PGND, SGND) equipotential at high frequencies and a resistor (R) suitable for making available a direct-current voltage corresponding to the potential difference between the earth conductors, and
a threshold comparator (TC) having its inputs connected to the filter (LPF) and its output connected to the control and diagnosis circuit means (IC; CDC).
